# EUROPÄISCHE PATENTSCHRIFT

(11) **EP 2 137 504 B1**
(45) Veröffentlichungstag und Bekanntmachung des Hinweises auf die Patenterteilung: **22.07.2015**
(21) Anmeldenummer: 08748738.5
(22) Anmeldetag: 09.04.2008
(51) Int. Cl.: F16C 41/00, F16C 33/58, G01L 3/10

(54) **WELLENANORDNUNG MIT EINEM WÄLZLAGER**
SHAFT ARRANGEMENT HAVING A ROLLING BEARING
SYSTÈME D'ARBRE À PALIER À ROULEMENT

(30) Priorität: 14.04.2007 DE 102007017705
(43) Veröffentlichungstag der Anmeldung: 30.12.2009
(73) Patentinhaber: Schaeffler Technologies AG & Co. KG, 91074 Herzogenaurach (DE)
(72) Erfinder: GRAB, Harald, 97520 Heidenfeld (DE); PAUSCH, Michael, 97464 Oberwerrn (DE)
(86) Internationale Anmeldenummer: PCT/DE2008/000601
(87) Internationale Veröffentlichungsnummer: WO 2008/125083

(56) Entgegenhaltungen:
- WO-A-03/102524
- WO-A1-00/58704
- US-A1- 2006 137 475
- US-B1- 6 370 967
- US-B1- 6 975 196

## Beschreibung

### Gebiet der Erfindung

Die Erfindung liegt auf dem Gebiet des Maschinenbaus, genauer auf dem Gebiet der Übertragung mechanischer Bewegungen durch Wellen, die üblicherweise in Wälzlagern gelagert sind.

Entsprechende Wellen und Lager gibt es in vielfältigen Ausprägungen, insbesondere in Getrieben, jedoch auch bei einfachen Motorantrieben und Generatoren.

Oft ist es für den Betrieb einer Maschine wichtig, welches Drehmoment durch eine Antriebswelle momentan übertragen wird. Dies ist zum Beispiel sinnvoll, um Leistungen zu steuern, mechanische Belastungen zu begrenzen, den Verschleiß zu minimieren und Risiken für Schäden zu verringern.

Es sind zu diesem Zweck bereits Torsionssensoren aus dem Stand der Technik bekannt, die auf verschiedenen Technologien beruhen.

Aus der DE 69834528 P2 ist ein magnetostriktiver Drehmomentsensor bekannt, bei dem ein magnetostriktiver Ring, insbesondere aus einem Verbundmaterial auf der Basis von Selten-Erd, Eisen- oder ähnlichen Legierungen auf eine Welle auf- oder in sie eingesetzt ist. Im drehmomentfreien Zustand herrscht ein azimutal umlaufendes Magnetfeld innerhalb des Rings, das durch Einbringen eines Drehmoments gestört wird, so dass ein resultierendes axiales Magnetfeld als Indikator des Drehmoments entsteht.

Die DE 102005006769 A1 zeigt allgemein als Umkehrung der Magnetostriktion den so genannten Villary-Effekt, mittels dessen durch Verformung, beispielsweise in Folge der Torsion einer Welle, eine magnetische Wirkung der Welle erzeugt wird. Als Materialien, die einen Villary-Effekt zeigen, werden Eisen, Kupfer, Nickel oder Legierungen dieser Metalle genannt.

Aus der DE 102205010338 A1 ist eine Kraftsensoranordnung bekannt, mit magnetostriktiven Widerstandssensoren, wobei eine inhomogene Schichtfolge von magnetischen Schichten vorgesehen ist, auf die eine magnetostriktive Wirkung ausgeübt wird. Danach wird in der Gesamtanordnung ein elektrischer Widerstand als Maß einer Verformung gemessen.

Aus dem japanischen Patent Abstract Nr.: 2001033322 A ist ein Wälzlager bekannt, auf dessen Innenring magnetostriktive Elemente angeordnet sind, wobei auf der Innenseite des Außenrings des Lagers Magnetsensoren vorgesehen sind. Das Drehmoment wirkt auf die Elemente in dem Lagerinnenring und soll somit eine Änderung der magnetischen Verhältnisse bewirken.

Aus der EP 1046893 B1 ist grundsätzlich die Verwendung des magnetostriktiven Effekts für die Drehmomentmessung und die Befestigung eines magnetostriktiven Ringelements auf einer Welle zur Übertragung des Drehmoments und zur Ausnutzung des Effektes bekannt. Es ist dort jedoch keine Konstruktion im direkten Zusammenhang mit dem Aufbau eines Wälzlagers beschrieben, in den ein Drehmomentsensor integriert wird. Zur Messung des Magnetfeldes ist ein spezieller Sensor beschrieben, mittels dessen eine Sättigungsmagnetisierung einer Sonde in verschiedenen Magnetisierungsrichtungen hochfrequent gemessen wird, wodurch das Magnetfeld infolge des magnetostriktiven Elements genau gemessen werden kann.

WO 03/102524 beschreibt eine Lageranordnung mit einem Torsionssensor und einem mit der Welle verbundenem magnetoelastischem Ring. Der Außenring des Lagers dient als Sensor halter wobei der Sensor unmittelbar neben der Laufbahm der Wälzkörper angeordnet ist.

Vor diesem Hintergrund hat sich die vorliegende Erfindung zur Aufgabe gestellt, für eine Wellenanordnung mit einer drehbaren Welle, die in einem Wälzlager mit Wälzkörpern und einem Außenring gelagert ist, möglichst platzsparend und konstruktiv besonders einfach eine Torsionsmessung ohne magnetischer Interaktion mit den Magnetfeldsensoren zu realisieren.

Die Aufgabe wird gemäß der Erfindung nach den Merkmalen des Patentanspruchs 1 gelöst durch einen Torsionssensor, der einen mit der Welle fest verbundenen permanentmagnetischen Ring sowie wenigstens einen an einem feststehenden, mit dem Außenring verbundenen Sensorträger befestigten Magnetfeldsensor aufweist.

Grundsätzlich ist die Konstruktion eines Torsionssensors an einer Welle unter Benutzung des magnetostriktiven Effektes bekannt. Gemäß der vorliegenden Erfindung wird dieser Effekt in optimierter Weise und Platz sparend in ein Drehlager integriert. Damit ist keine gesonderte Halterung für den Sensor notwendig und dieser kann gemeinsam mit den Teilen des Drehlagers hergestellt und montiert werden. Dabei können die übrigen Teile des Lagers, die sich später in unmittelbarer Nachbarschaft des Torsionssensors befinden, kontrolliert und schon bei der Herstellung darauf hin geprüft werden, dass nicht ungewollte magnetische Effekte die Messgenauigkeit beeinflussen.

Vorteilhaft ist die Erfindung dadurch ausgestaltet, dass der Sensorträger die Welle ringförmig umgibt und den/die Magnetfeldsensor(en) an seiner Innenseite trägt.

Damit kann der Sensorträger den oder die Magnetfeldsensoren mechanisch nach außen abschirmen und vor ungewollten Einflüssen von außen schützen. Der oder die Sensoren liegen dann unmittelbar an der Innenseite des Sensorträgers dem entsprechenden permanentmagnetischen Ring gegenüber.

Besonders einfach wird die Konstruktion, wenn der Sensorträger eine Fortsetzung des Außenrings in axialer Richtung der Welle bildet. Der Außenring ist einfach axial verlängert, um in einem ersten Bereich die Laufbahn für Wälzkörper und in einem zweiten, axial gegenüber dem ersten Bereich versetzten, Bereich den Sensorträger zu bilden.

Die Magnetfeldsensoren können dabei innen an dem Sensorträger entweder durch Kleben befestigt oder auch in Ausnehmungen eingelassen sein. Wesentlich ist, dass das Material des Sensorträgers derart gewählt sein sollte, dass keine magnetische Interaktion mit den Magnetfeldsensoren stattfindet. Der Sensorträger besteht zu diesem Zweck aus einem magnetisch abschirmenden Material.

Der Sensorträger kann auch mittels einer zylindrischen Hülse mit dem Außenring verbunden sein.

In diesem Fall kann der Sensorträger beispielsweise mittels der Hülse aufsteckbar, verlötbar oder verschweißbar mit dem Außenring sein.

Der Sensorträger kann auch durch eine Hülse gebildet sein, die auf den Außenring aufsteckbar ist.

Mittels der genannten Konstruktionen kann jedenfalls vorteilhaft ausgenutzt werden, dass der Außenring den Sensorträger trägt und damit keine weitere Tragekonstruktion für den Sensorträger notwendig wird.

Bei der Gestaltung des permanentmagnetischen magnetostriktiven Rings ist es wichtig, dass dieser an einer Torsion der Welle teilhat. Zu diesem Zweck kann es vorteilhaft vorgesehen sein, dass der permanentmagnetische Ring auf der Mantelfläche der Welle im Bereich des Sensorträgers befestigt ist.

In diesem Fall kann der permanentmagnetische Ring mit der Welle formschlüssig verbunden sein. Dies kann beispielsweise durch eine Verzahnung, eine Nut-Federverbindung oder ähnliche geometrisch ineinander greifende Gestaltungen von Ring und Welle gewährleistet sein.

Es kann zur festen Verbindung zwischen der Welle und dem permanentmagnetischen Ring auch eine kraftschlüssige Verbindung, beispielsweise durch Aufschrumpfen des Rings, vorgesehen sein.

Auch eine stoffschlüssige Verbindung durch Auflöten oder Aufschweißen sowie Verkleben ist denkbar.

Schließlich kann der permanentmagnetische Ring auch in die Welle integriert sein, entweder dadurch, dass er in einer Ausnehmung der Welle eingelegt oder einstückig mit dieser als Teil der Welle ausgebildet ist. Dies kann beispielsweise dadurch gewährleistet sein, dass die Welle stückweise aus unterschiedlichen Materialien besteht, wobei der Ring aus permanentmagnetischem Material vorgesehen ist oder dadurch, dass die Welle teilweise, im Bereich des Rings, magnetisiert und ansonsten nicht magnetisiert ist.

Zum konstruktiv einfachen Aufbau der erfindungsgemäßen Anordnung ist auch denkbar, dass der permanentmagnetische Ring als axiale Verlängerung des Innenrings des Lagers ausgebildet ist, soweit ein solcher vorgesehen und die innere Lauffläche der Wälzkörper nicht durch die Mantelfläche der Welle selbst gebildet ist. In diesem Fall kann die gesamte Sensoranordnung mit den Magnetfeldsensoren und dem permanentmagnetischen Ring vollständig in Bauteile des Drehlagers integriert sein.

Die Funktion der Erfindung stellt sich derart dar, dass im drehmomentfreien Zustand der Welle der magnetische Fluss durch den permanentmagnetischen Ring in Umfangsrichtung unterbrechungsfrei kreisringförmig verläuft, so dass keine magnetischen Wirkungen nach außen treten.

Dies wird durch eine entsprechende Aufmagnetisierung beim Bau oder bei der Einrichtung der Anordnung gewährleistet.

Wird nun eine Torsion in die Welle eingebracht, die mit dem permanentmagnetischen Ring geteilt wird, so entstehen durch den insbesondere anisotropen magnetostriktiven Effekt störende abweichende magnetische Flusselemente, bei denen insbesondere die Richtung des Flusses von der Umfangsrichtung abweicht und insgesamt eine Axialkomponente des magnetischen Flusses in Achsrichtung der Welle entstehen kann. Dies führt dazu, da in dieser Richtung der magnetische Fluss nicht innerhalb des Rings geschlossen ist, dass Magnetfeldkomponenten beziehungsweise Flusslinien nach außen treten, die in den Magnetfeldsensoren nachgewiesen werden können. Die entsprechenden Sensoren können beispielsweise als Hallsensoren oder in Form einfacher magnetischer Messspulen ausgebildet sein oder einen anderen bekannten magnetischen Effekt ausnutzen. Da im Normalzustand keine Feldstärke messbar ist, können die Magnetfeldsensoren auf große Empfindlichkeit eingestellt werden und damit auch kleine Torsionsmomente nachweisen.

Grundsätzlich kann bei der Vorbereitung beziehungsweise Aufmagnetisierung des permanentmagnetischen Rings eine Vielzahl von Methoden zur Magnetisierung verwendet werden. Als vorteilhaft hat sich dabei die Methode herausgestellt, einen Strom hoher Stromstärke durch einen den Ring durchsetzenden Leiter zu schicken, der ein entsprechendes in der gewünschten Umfangsrichtung gerichtetes Magnetfeld hoher Stärke erzeugen kann, mit dem in geeigneten Materialien eine Permanentmagnetisierung gewährleistet werden kann.

Im folgenden wird die Erfindung anhand eines Ausführungsbeispiels in einer Zeichnung gezeigt und anschließend beschrieben. Dabei zeigt:
- Fig. 1: eine erste Wellenanordnung gemäß der Erfindung;
- Fig. 2: eine zweite Wellenanordnung;
- Fig. 3: eine dritte Wellenanordnung gemäß der Erfindung;
- Fig. 4: eine Messanordnung zum Nachweis des Magnetfelds;
- Fig. 5: eine Konfiguration zur Magnetisierung des permanentmagnetischen Rings.

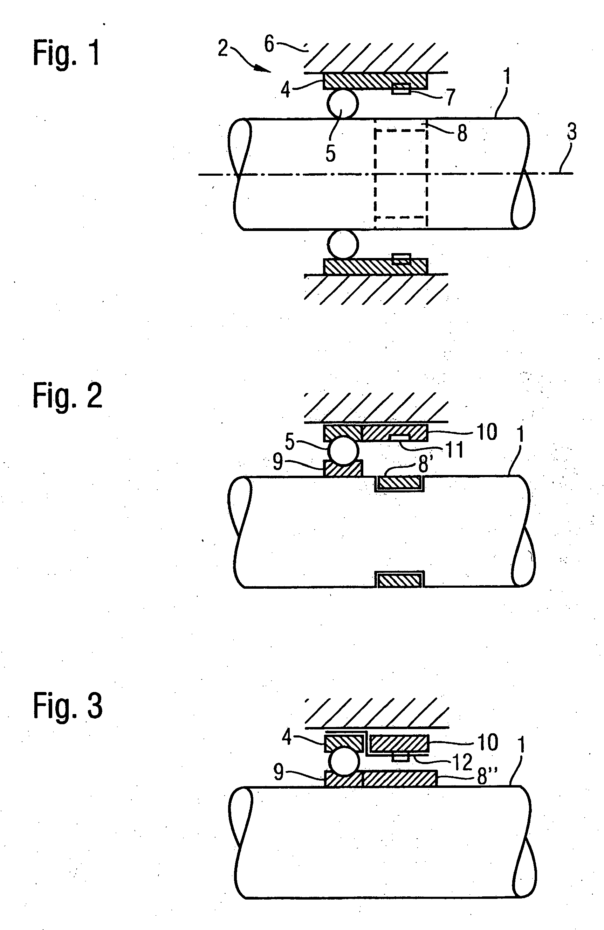

Figur 1 zeigt in einer teilweise geschnittenen Anordnung eine Welle 1, beispielsweise aus Stahl, die in einem Drehlager 2 um die Achse 3 drehbar gelagert ist. Das Lager 2 weist einen Außenring 4 auf, der eine Lauffläche für Wälzkörper 5, im vorliegenden Fall Kugeln, aufweist. Die Lauffläche des Außenrings 4 kann ebenfalls wie die Oberfläche der Kugeln 5 gehärtet oder tribologisch günstig beschichtet sein.

Die innere Lauffläche für die Lagerkugeln 5 ist durch die Oberfläche der Welle 1, die eine Laufnut aufweisen kann, gegeben.

Der Außenring 4 ist in einem Stützkörper 6 gehalten, der durch den Aufbau der Maschine, die die Welle 3 enthält, gegeben ist.

Der Außenring ist in axialer Richtung der Achse 3 über den Bereich, in dem sich die Kugeln befinden, hinaus verlängert und trägt dort an seiner inneren Mantelfläche die Magnetfeldsensoren 7, von denen beispielsweise zwei am Umfang des Außenrings 4 verteilt sein können. Diese Magnetfeldsensoren 7 sind beispielsweise als Hallsensoren oder einfach als gewickelte elektrische Spulen, gegebenenfalls gefüllt mit einem ferromagnetischen Werkstoff, ausgefüllt. Sie sind derart ausgerichtet, dass sie axiale Komponenten eines Magnetfeldes in Bezug auf die Achse der Welle nachweisen können.

Weiter ist der Figur 1 ein permanentmagnetischer Ring 8 zu entnehmen, der einen Teil der Welle 1 bildet und an ihrer umfangsseitigen Mantelfläche liegt.

In dem permanentmagnetischen Ring 8 herrscht ein magnetischer Fluss, der an der Umfangsseite der Welle azimutal umläuft und innerhalb des Rings geschlossen ist, so dass praktisch keine Magnetfeldkomponenten nach außen treten.

In diesem Zustand weisen die Magnetfeldsensoren 7 keine axiale Komponente des von dem Ring 8 ausgehenden Magnetfeldes nach.

Wird die Welle 1 tordiert, so ergibt sich in Folge der Torsion des permanentmagnetischen Rings 8 dort, insbesondere wenn eine anisotrope magnetostriktive Eigenschaft vorausgesetzt wird, eine Störung des magnetischen Flusses mit der Entstehung von axialen Magnetfeldkomponenten. Auf diesen Effekt wird weiter unten näher eingegangen. Jedenfalls weisen in diesem Fall die Magnetfeldsensoren außerhalb des permanentmagnetischen Rings 8 eine axiale Magnetfeldkomponente als Streufeld nach, woraus auf die Torsion der Welle und im Bezug auf die Magnetfeldstärke auch auf das Maß der Torsion geschlossen werden kann.

Figur 2 zeigt eine andere Realisierung einer Wellenanordnung gemäß der Erfindung mit einer Welle 1, in die ein gesonderter Körper 8' am Umfang derart eingelassen ist, dass er mit der äußeren Mantelfläche der Welle 1 abschließt. Der permanentmagnetische Ring 8' ist beispielsweise in einer Nut der Welle 1 festgeklebt. Er kann an einer Stelle seines Umfangs unterbrochen sein, damit er federnd aufgeschnappt werden kann.

Das Drehlager unterscheidet sich von dem in der Figur 1 gezeigten Drehlager dadurch, dass auch ein Innenring 9 vorgesehen ist, der auf der Welle 1 befestigt ist und eine Lauffläche für die Kugeln 5 bietet.

Zudem ist der Außenring in axialer Richtung geteilt und die Verlängerung 10 des Außenrings weist Ausnehmungen 11 auf, in denen die Magnetfeldsensoren untergebracht sind. Die Verlängerung 10 sollte, um die Magnetfeldmessung nicht zu stören, aus einem magnetisch inerten Material bestehen. Sie kann beispielsweise aus einem magnetisch abschirmenden Material bestehen.

In der Figur 3 ist eine weitere etwas geänderte Version der Erfindung dargestellt, wobei der permanentmagnetische Ring 8" als axiale Verlängerung des inneren Rings 9 des Lagers ausgebildet ist. Der permanentmagnetische Ring 8" ist auf die Welle 1 aufgeschweißt, aufgelötet oder aufgeklebt oder formoder kraftschlüssig aufgebracht.

Das eigentliche Lager ist durch den Innenring 9, den Außenring 4 und die Kugeln 5 gebildet, wobei mittels einer Hülse 12 der Sensorträger 10 an dem Außenring 4 festgeklemmt ist. Dadurch kann der Sensorträger nach Aufbau des Drehlagers noch eingebracht werden.

Der Sensorträger 10 trägt dabei die Magnetfeldsensoren, die dem permanentmagnetischen Ring 8" zur Messung axialer Magnetfeldkomponenten gegenüberstehen.

Im unteren Teil der Figur 3 ist ebenso wie bei der Figur 2 die Lageranordnung der Übersichtlichkeit halber weggelassen.

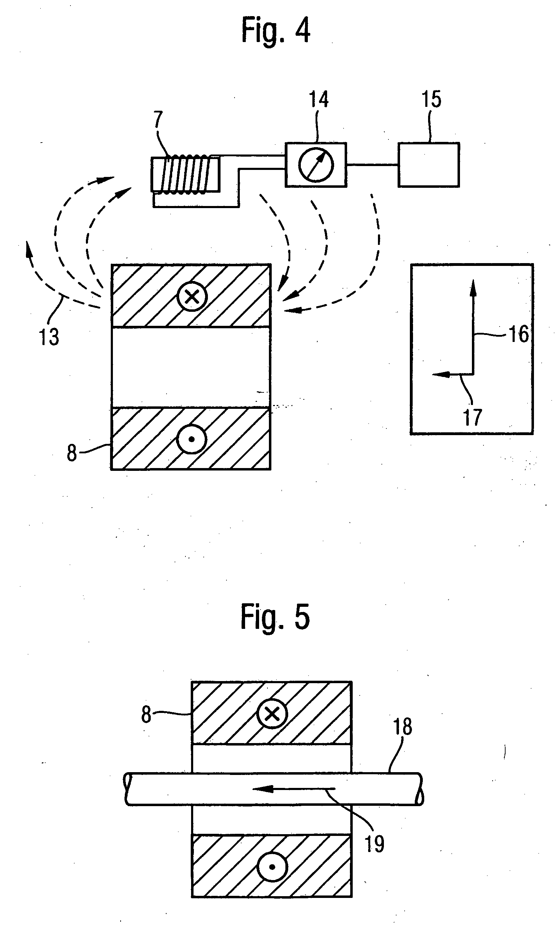

Figur 4 zeigt die grundsätzliche Funktion der Messanordnung.

Es ist schematisch der permanentmagnetische Ring 8 in einem Schnitt dargestellt, mit den magnetischen Flusslinien, die auf der unteren Seite aus der Zeichenebene herausragen und im oberen Teil in die Zeichenebene hineinragen.

Wird nun eine Torsion eingebracht, so entsteht eine axiale Komponente des Magnetfeldes, die zu einem Streufeld führt, welches durch die gestrichelten Linien 13 dargestellt ist. Der Streufluss schließt sich über den Luftspalt und durchdringt dabei auch die Magnetfeldsensoren 7, von denen einer schematisch durch eine Spule mit Anschlüssen dargestellt ist.

Die Anschlüsse der Spule sind mit einem Strommessgerät 14 verbunden, das ein zu der Magnetfeldstärke proportionales Messsignal liefert. Dieses kann noch mit verschiedenen Effekten korrigiert werden, um beispielsweise Einflüsse des Erdmagnetfeldes auszuschließen und danach kann das Ergebnis auf das Maß der Torsion in einer Berechnungs- und Anzeigeeinheit 15 umgerechnet und angezeigt werden.

Im rechten Teil der Figur neben dem Schnitt des permanentmagnetischen Rings 8 ist eine seitliche Ansicht des Rings gezeigt, mit der in Umfangsrichtung des Rings gerichteten magnetischen Flusskomponente 16 sowie der axial gerichteten Komponente 17, die im Falle der Aufbringung eines Torsionsmomentes entsteht.

Da derartige axiale Flusskomponenten nicht innerhalb des Materials geschlossen werden können, entstehen die oben dargestellten Streuflüsse.

In der Figur 5 ist eine typische Anordnung zu Erzeugung einer Permanentmagnetisierung in einem permanentmagnetischen Ring 8 gezeigt, wobei schematisch lediglich ein Leiter 18 angedeutet ist, der in Richtung des Pfeils 19 von einem hohen Strom großer Stromstärke durchflossen ist, beispielsweise von einem impulsartigen Strom und der aufgrund des Ampere'schen Gesetzes einen magnetischen Fluss erzeugt, der den Leiter kreisförmig umgibt und der zu einer entsprechenden Remanenz in dem Ring 8 führt.

Ein solches Vorgehen bietet sich beispielsweise auch im Fall einer Welle an, in die ein entsprechender Ring 8 integriert ist, wobei dann die Welle als Leiter genutzt wird. Dabei kann der Ring 8 auch als Beschichtung im Bereich der Welle mit einem ferromagnetischen Material verwirklicht sein. Eine derartige Beschichtung lässt sich beispielsweise auch galvanisch oder durch Aufdampfen aufbringen.

Zusammenfassend ist festzustellen, dass mit der Erfindung durch die Integration eines Torsionssensors in ein Lager eine konstruktiv einfache und kostengünstige Lösung für einen Torsionssensor gegeben ist.

### Bezugszeichenliste

- 1: Welle
- 2: Wälzlager
- 3: Achse
- 4: Außenring
- 5: Wälzkörper
- 6: Stützkörper
- 7: Magnetfeldsensor
- 8, 8', 8": Permanentmagn. Ring
- 9: Innenring
- 10: Sensorträger, Verlängerung
- 11: Ausnehmung
- 12: Hülse
- 13: Magnetfeldlinien
- 14: Strommessgerät
- 15: Anzeigeeinheit
- 16: Umfangsgerichtete Flusskomponente
- 17: Axialkomponente
- 18: Leiter
- 19: Pfeil

## Patentansprüche

1. Wellenanordnung mit einer drehbaren Welle (1), die in einem Wälzlager (2) mit Wälzkörpern (5) und einem Außenring (4) gelagert ist, umfassend
einen Torsionssensor (7,8), der einen mit der Welle fest verbundenen permanentmagnetischen magnetostriktiven Ring (8,8',8") sowie wenigstens einen an einem feststehenden, mit dem Außenring verbundenen Sensorträger (10) befestigten Magnetfeldsensor (7) aufweist, wobei der Sensorträger (10) die Welle (1) ringförmig umgibt und den/die Magnetfeldsensor(en) (7) an seiner Innenseite trägt,
**dadurch gekennzeichnet,**
**dass** der Sensorträger (10) aus einem magnetisch abschirmenden Material besteht, und
**dass** der Sensorträger (10) eine Fortsetzung des Außenrings (4) in axialer Richtung der Welle bildet.

2. Wellenanordnung nach Anspruch 1,
**dadurch gekennzeichnet,**
**dass** der Außenring (4) axial verlängert ist.

3. Wellenanordnung nach Anspruch 1,
**dadurch gekennzeichnet,**
**dass** der Sensorträger (10) mittels einer zylindrischen Hülse (12) mit dem Außenring (4) verbunden ist.

4. Wellenanordnung nach Anspruch 1 oder 2,
**dadurch gekennzeichnet,**
**dass** der Außenring (4) den Sensorträger (10) trägt.

5. Wellenanordnung nach Anspruch 1,
**dadurch gekennzeichnet,**
**dass** der Außenring in axialer Richtung geteilt ist und eine Verlängerung als Sensorträger (10) ausbildet.

6. Wellenanordnung nach Anspruch 5,
**dadurch gekennzeichnet,**
**dass** die Verlängerung (10) aus einem magnetisch inertem Material besteht.

7. Wellenanordnung nach einem der Ansprüche 1 bis 6,
**dadurch gekennzeichnet,**
**dass** der permanentmagnetische Ring (8,8',8") als Teil der Welle (1) einstückig mit dieser ausgebildet ist.

## Claims

1. Shaft arrangement having a rotatable shaft (1) which is mounted in a roller bearing (2) with roller bodies (5) and an external ring (4), comprising a torsion sensor (7, 8) which has a permanent-magnet magnetostrictive ring (8, 8', 8") which is fixedly connected to the shaft, and also has at least one magnetic field sensor (7) which is fastened to a stationary sensor support (10) which is connected to the external ring, wherein the sensor support (10) surrounds the shaft (1) in the form of a ring and carries the magnetic field sensor (s) (7) on its inner face, **characterized in that** the sensor support (10) is composed of a magnetically shielding material, and **in that** the sensor support (10) forms a projection of the external ring (4) in the axial direction of the shaft.

2. Shaft arrangement according to Claim 1, **characterized in that** the external ring (4) is axially extended.

3. Shaft arrangement according to Claim 1, **characterized in that** the sensor support (10) is connected to the external ring (4) by means of a cylindrical sleeve (12).

4. Shaft arrangement according to Claim 1 or 2, **characterized in that** the external ring (4) supports the sensor support (10).

5. Shaft arrangement according to Claim 1, **characterized in that** the external ring is divided in the axial direction and forms an extension as the sensor support (10).

6. Shaft arrangement according to Claim 5, **characterized in that** the extension (10) is composed of a magnetically inert material.

7. Shaft arrangement according to one of Claims 1 to 6, **characterized in that** the permanent-magnet ring (8, 8', 8") is integrally formed with the shaft (1) as part of the said shaft.

## Revendications

1. Agencement d'arbre comprenant un arbre rotatif (1) qui est monté dans un palier à roulement (2) pourvu de corps de roulement (5) et d'une bague extérieure (4), comportant
un capteur de torsion (7, 8) qui comprend une bague magnétostrictive à aimantation permanente (8, 8', 8") reliée fixement à l'arbre, ainsi qu'au moins un capteur de champ magnétique (7) fixé à un support de capteur (10) fixe relié à la bague extérieure,
le support de capteur (10) entourant l'arbre (1) de manière annulaire et portant le(s) capteur(s) de champ magnétique (7) sur son côté intérieur,
**caractérisé en ce que**
le support de capteur (10) est constitué d'un matériau de blindage magnétique, et
**en ce que** le support de capteur (10) forme un prolongement de la bague extérieure (4) dans la direction axiale de l'arbre.

2. Agencement d'arbre selon la revendication 1,
**caractérisé en ce que**
la bague extérieure (4) est prolongée axialement.

3. Agencement d'arbre selon la revendication 1,
**caractérisé en ce que**
le support de capteur (10) est relié à la bague extérieure (4) au moyen d'une douille cylindrique (12).

4. Agencement d'arbre selon la revendication 1 ou 2,
**caractérisé en ce que**
la bague extérieure (4) porte le support de capteur (10).

5. Agencement d'arbre selon la revendication 1,
**caractérisé en ce que**
la bague extérieure et divisée dans la direction axiale et forme un prolongement en tant que support de capteur (10).

6. Agencement d'arbre selon la revendication 5,
**caractérisé en ce que**
le prolongement (10) est constitué d'un matériau magnétiquement inerte.

7. Agencement d'arbre selon l'une quelconque des revendications 1 à 6,
**caractérisé en ce que**
la bague à aimantation permanente (8, 8', 8") est réalisée d'une seule pièce avec l'arbre (1) en tant que partie de celui-ci.
